# FASCICULE DE BREVET EUROPEEN

(11) **EP 3 792 807 B1**
(45) Date de publication et mention de la délivrance du brevet: **05.03.2025**
(21) Numéro de dépôt: 20190930.6
(22) Date de dépôt: 13.08.2020
(51) Int. Cl.: G06F 21/74, G06F 21/76, G05B 9/02, G05B 19/05

(54) **SYSTÈME DE SÉCURISATION D'UN DISPOSITIF**
SICHERUNGSSYSTEM EINER VORRICHTUNG
SYSTEM FOR SECURING A DEVICE

(30) Priorité: 10.09.2019 FR 1909965
(43) Date de publication de la demande: 17.03.2021
(73) Titulaire: Schneider Electric Industries SAS, 92500 Rueil Malmaison (FR)
(72) Inventeur: EHLE, Valérie, 06270 Villeneuve Loubet (FR); EYRAUD, Annick, 06600 Antibes (FR); BUCHET, Yannick, 06410 Biot (FR); FABRON, David, 06510 Gattières (FR)
(74) Mandataire: Schneider Electric

(56) Documents cités:
- WO-A1-2018/038536
- WO-A2-2007/053822
- CN-U- 206 002 929
- US-A1- 2011 087 870
- US-A1- 2016 370 785
- US-B1- 8 813 244
- WILKINSON GARY: "TriStation 1131 Developer's Workbench", 1 October 2004 (2004-10-01), pages 1 - 352, XP093233422, Retrieved from the Internet <URL:https://web.archive.org/web/20170505084508/https://www.nrc.gov/docs/ML0932/ML093290419.pdf> [retrieved on 20170505]

## Description

### Domaine technique

La présente invention concerne un système de sécurité ou de sécurisation.

Elle relève du domaine des applications d'automatisme, notamment pour des automatismes industriels, du bâtiment ou des systèmes de contrôle et/ou de commande d'un réseau de distribution d'énergie.

### Technique antérieure

Il est connu d'utiliser des automates programmables pour la gestion de processus domestiques ou industriels, par exemple pour la gestion d'un réseau d'électricité.

Afin d'assurer la sécurité de ces processus contre tout risque de vol de données ou tentative d'intrusion malveillante, les automates comprennent généralement un ou plusieurs systèmes de sécurité permettant d'assurer le contrôle et l'intégrité des données stockées ainsi que la fiabilité des communications des automates.

Ces systèmes de sécurité peuvent par exemple prendre la forme de logiciels (outil anti-malware, pare-feu, recherche de vulnérabilité, etc.) ou de restrictions d'accès physiques ( clés, de mots de passes chiffrés, etc.).

A titre d'exemple, afin de contrôler l'accès local direct à certains modules d'automates, ceux-ci comprennent un système de sécurisation sous la forme d'une interface homme machine, nécessitant qu'un opérateur rentre un mot de passe sur un clavier s'il souhaite accéder à l'automate.

Toutefois, de tels systèmes n'apportent pas entièrement satisfaction.

En effet, il est nécessaire de prévoir une interface homme machine par module de l'automate. Outre le fait qu'une interface homme machine est onéreuse, longue à mettre en œuvre sur chaque module et est fortement consommatrice d'énergie, celle-ci peut être vulnérable si le mot de passe a été divulgué ou volé.

En outre, bien que certaines situations de fonctionnement nécessitent un état de sécurité élevé des automates, un état de sécurité plus faible peut également être suffisants dans d'autres situations de fonctionnement, ne nécessitant donc pas de systèmes de sécurité relativement complexes.

Le document de l'état de la technique WO2018038536 divulgue un procédé qui consiste à accorder à l'utilisateur qui utilise un terminal en mode de verrouillage et en mode de déverrouillage une première et une seconde autorité qui permettent à l'utilisateur de piloter respectivement le premier et le second ensemble d'éléments. Le second ensemble comprend plus d'éléments que le premier ensemble. Le premier résultat est obtenu en pilotant l'élément du premier ensemble en mode de verrouillage. Le mode de verrouillage est commuté en mode de déverrouillage tout en effaçant une partie des premiers résultats après l'obtention du premier résultat, empêchant les premiers résultats d'affecter les éléments du second ensemble lorsque l'utilisateur utilise le terminal en mode de déverrouillage.

### Résumé

L'invention vient améliorer la situation.

L'invention vise plus particulièrement à fournir un système de sécurisation efficace pour un dispositif, tel qu'un automate, pour un usage particulièrement simple et flexible, permettant notamment de faire varier l'état de sécurité de façon simple et sécurisée en fonction des besoins de fonctionnement.

Il est proposé un système de sécurisation monté sur un dispositif, le système de sécurisation comprenant un élément de commande actionnable par un opérateur au moins :
- dans première position, dans laquelle le dispositif est configuré pour être dans un état de sécurité élevé, et
- dans deuxième position, dans laquelle le dispositif est configuré pour être dans un état de sécurité faible.

Grâce à ces dispositions, l'actionnement d'un élément de commande au niveau du dispositif permet de déterminer l'état de sécurité attendu. Il est ainsi mis en œuvre des moyens à la fois de contrôle d'accès physiques et des moyens logiciels particulièrement simples et efficaces pour assurer la sécurité du dispositif.

Plus particulièrement, une connexion à distance au dispositif ne permet pas de modifier son état de sécurité, un accès direct et l'actionnement du système de sécurisation étant nécessaire.

Selon un autre aspect, il est proposé un dispositif comprenant un tel système de sécurisation.

Selon un autre aspect, il est proposé un procédé de fonctionnement d'un tel système de sécurisation, comprenant les étapes suivantes :
- si l'élément de commande est dans la première position :
- vérifier si une sécurité a déjà été configurée sur le dispositif, et
- si non, télécharger des données de configuration spécifiques au dispositif et configurer la sécurité sur le dispositif avant son utilisation.

Selon un autre aspect, il est proposé un programme informatique comportant des instructions pour la mise en œuvre de tout ou partie d'un procédé tel que défini dans les présentes lorsque ce programme est exécuté par un processeur.

Selon un autre aspect, il est proposé un support d'enregistrement non transitoire, lisible par un ordinateur, sur lequel est enregistré un tel programme.

Par « ordinateur », on entend tout support de traitement d'information programmable, par exemple un processeur compris dans un ordinateur fixe, tablette, téléphone portable ou autres.

Les caractéristiques exposées dans les paragraphes suivants peuvent, optionnellement, être mises en œuvre. Elles peuvent être mises en œuvre indépendamment les unes des autres ou en combinaison les unes avec les autres :

L'état de sécurité élevée comprend une configuration de fonctions de protection logicielles.

L'élément de commande est actionnable par un opérateur manuellement.

L'élément de commande comprend une fente permettant de faire pivoter un sélecteur entre au moins la première position et la deuxième position.

L'élément de commande est actionnable par un opérateur au moyen d'une communication sans fil avec le dispositif effectuée à courte portée.

L'élément de commande est également actionnable dans une troisième position, dans laquelle le dispositif est dans un état réinitialisé.

Le dispositif est un automate programmable industriel ou un module d'automate programmable industriel.

Le dispositif comprend une face avant et une face arrière, le système de sécurisation étant monté sur la face arrière, la face arrière étant configurée pour être disposé en contact avec un support.

Le procédé comprend les étapes suivantes :
- si l'élément de commande est dans la troisième position :
- actionner l'élément de commande dans la première position ou la deuxième position.

L'actionnement de l'élément de commande entre la première position et la deuxième position nécessite un passage intermédiaire dans la troisième position.

### Brève description des dessins

D'autres caractéristiques, détails et avantages apparaîtront à la lecture de la description détaillée ci-après, et à l'analyse des dessins annexés, sur lesquels :
**Fig. 1**

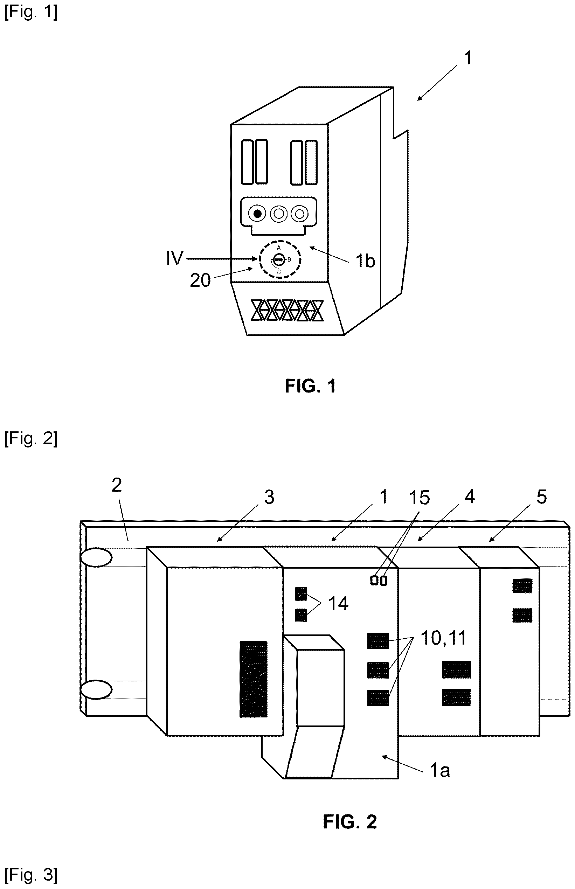

   [Fig. 1] montre une vue en perspective de la face arrière d'un dispositif comprenant un système de sécurisation selon un mode de réalisation.
**Fig. 2**
   [Fig. 2] montre une vue en perspective de la face avant du dispositif de la [Fig. 1] fixé sur un support avec d'autres dispositifs.
**Fig. 3**

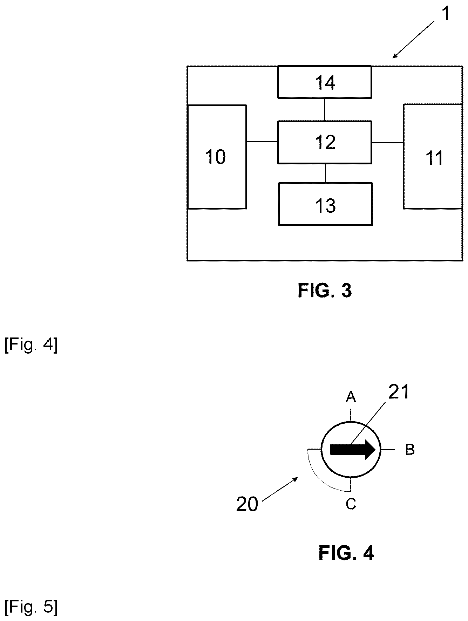

   [Fig. 3] montre un vue schématique du dispositif de la [Fig. 1].
**Fig. 4**
   [Fig. 4] montre une vue agrandie partielle de la face arrière du dispositif de la [Fig. 1].
**Fig. 5**

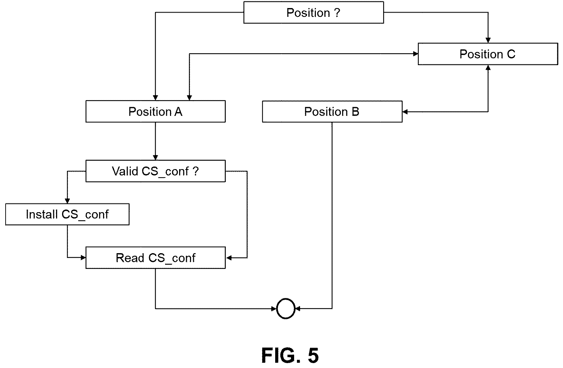

   [Fig. 5] montre un schéma illustrant le procédé de fonctionnement du système de sécurisation selon un mode de réalisation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Il est fait référence à la [Fig. 1], qui représente un dispositif 1 comprenant un système de sécurisation selon l'invention. Le système de sécurisation est plus particulièrement un dispositif de protection informatique, également appelé système de cybersécurité.

Selon une réalisation, le dispositif 1 est mis en œuvre dans un automate programmable industriel (API ; en anglais « Programmable Logic Controller », PLC). Un tel automate est configuré pour commander un processus domestique ou industriel, notamment par un traitement séquentiel d'informations. Plus particulièrement, l'automate permet de transmettre une commande à un ou plusieurs aux autres automates ou actionneurs à partir de données d'entrées, tels que des mesures de capteurs, de consigne ou autres.

A titre d'exemple, l'automate permet la commande de machines et de capteurs dans une usine ou un bâtiment, ou le pilotage d'un système de gestion d'énergie.

Avantageusement, le dispositif 1 selon l'invention concerne un automate sécurisé.

Selon une réalisation, le dispositif 1 est un module, tel qu'un module de communication, de l'automate. Plus généralement, le dispositif 1 peut être tout module ou équipement industriel permettant une configuration de sécurité à distance.

Comme illustré sur la [Fig. 2], le dispositif 1 peut être configuré pour être monté sur un support, par exemple un rail 2. Le support 2 comprend généralement d'autres dispositifs 3, 4, 5 agencés de façon modulaire les uns par rapport aux autres. Le dispositif 1 peut ainsi être stocké dans une armoire électrique (non illustrée).

Le dispositif 1 a généralement une forme parallèpipédique. Toutefois, d'autres formes sont également envisageables.

Le dispositif 1 comprend ainsi une face avant 1a, visible sur la [Fig. 2], accessible à un opérateur.

Le dispositif 1 comprend également une face arrière 1b, visible sur la [Fig. 1], susceptible de venir en regard, notamment en contact, avec le support 2. Une fois le dispositif 1 fixé sur le support 2, la face arrière 1b n'est plus directement accessible à l'opérateur. Il est nécessaire de démonter le dispositif 1 du support 2 afin de pouvoir accéder à la face arrière 1b.

Comme illustré sur la [Fig. 2] et la [Fig. 3], le dispositif 1 comprend des interfaces entrées 10 / sorties 11 configurées pour recevoir et envoyer des informations depuis / vers le dispositif 1 pour la gestion du processus.

Le dispositif 1 comprend également un processeur 12 (en anglais « Central Processing Unit », CPU) configuré pour traiter des instructions qui constituent le programme informatique de fonctionnement du dispositif 1.

Le dispositif 1 comprend également une mémoire 13 configurée pour stocker les instructions constituant le programme informatique de fonctionnement ainsi que diverses informations.

Le dispositif 1 comprend également une interface de communication 14, filaire ou sans fil, notamment vers un serveur distant configuré pour stocker les données du dispositif 1.

Enfin, le dispositif 1 peut comprendre une source d'alimentation, telle qu'une batterie (non illustrée), ou être relié directement à un réseau d'électricité.

Selon l'invention, le dispositif 1 comprend en outre au moins un système de sécurisation. Le système de sécurisation comprend un élément de commande 20 monté sur le dispositif 1.

Comme illustré sur la [Fig. 1], l'élément de commande 20 est avantageusement monté sur la face arrière 1b du dispositif 1.

L'élément de commande 20 peut être actionné par un opérateur.

Selon une réalisation, l'élément de commande 20 peut être actionné manuellement par l'opérateur.

A cet effet, l'élément de commande 20 peut comprendre une fente permettant l'utilisation d'un élément type tournevis plat pour faire pivoter un sélecteur 21. Toutefois, d'autres types d'actionnements manuels sont possibles, au moyen d'une clé, d'une manivelle ou de tout autre outil connu en soi, spécifique ou non. En outre, d'autres types d'élément de commande 20 sont possibles, tel qu'un bouton pivotant ou autres.

Selon une autre réalisation, l'élément de commande 20 peut être actionné sans contact par l'opérateur. L'actionnement est avantageusement réalisé à courte portée.

Par « à courte portée », on entend notamment un actionnement par une communication sans fil avec le dispositif 1 effectuée par exemple à une distance inférieure à 1 mètre, voire avantageusement à distance inférieure à 10 centimètres. Une telle communication à courte portée peut par exemple utiliser la technologie de communication en champ proche (en anglais « Near Field Communication » ; NFC).

Une telle communication à courte portée est avantageusement sécurisée en termes d'authentification, d'intégrité, et de confidentialité d'information.

Ainsi, l'élément de commande 20 est actionnable entre au moins une première position et une deuxième position.

Dans la première position (illustrée par la position A sur la [Fig. 4]), le dispositif 1 est dans un état de sécurité élevé. Plus particulièrement, le dispositif 1 requiert une configuration de sécurité préalable pour pouvoir être utilisé. Une telle configuration permet de mettre en œuvre des fonctions de protection, notamment logicielles, connues en soi telles qu'un cryptage de données, un pare-feu, un contrôle d'accès, un diagnostic de protection, des mises à jour, ou autres.

A titre d'exemple, le dispositif 1 ne peut pas établir de communication tant que la configuration de l'état de sécurité n'a pas été effectuée. Une fois dans l'état de sécurité, les communications sont authentifiées et sécurisées.

Dans la deuxième position (illustrée par la position B sur la [Fig. 4]), le dispositif 1 est dans un état de sécurité faible.

Par « états de sécurité élevé / faible », on entend que les états de sécurité s'entendent relativement l'un à l'autre. Ainsi, l'état de sécurité de sécurité faible peut correspondre à un état standard, dans lequel le dispositif 1 ne requiert pas de configuration de sécurité, ou comprend des fonctions de protection relativement moins importantes que celles prévues dans l'état de sécurité élevé.

Selon une réalisation, l'élément de commande 20 peut en outre être actionné dans une ou plusieurs autres positions correspondant à d'autres états de sécurité du dispositif 1, non décrits par la suite.

Selon le mode de réalisation illustré sur la [Fig. 4], l'élément de commande 20 peut également être actionné dans une troisième position.

Dans la troisième position (illustrée par la position C sur la [Fig. 4]), le dispositif 1 est dans un état réinitialisé. Plus particulièrement, le dispositif 1 est remis dans son état initial, notamment dans son état de sortie d'usine. La configuration de sécurité ainsi qu'une partie ou toutes les fonctions de protection éventuellement mises en œuvre par le dispositif 1 sont supprimées, notamment effacées de la mémoire 13 du dispositif 1.

Le dispositif 1 comprend avantageusement une sortie dédiée permettant à l'opérateur de connaitre l'état de sécurité du dispositif 1, par exemple via une tour de signalisation ou colonne lumineuse montée sur l'armoire électrique comprenant le dispositif 1 ou via une application logicielle à destination de l'opérateur.

Le dispositif 1 peut également comprendre un indicateur permettant à un opérateur de connaître notamment l'état de sécurité du dispositif 1. L'indicateur est disposé sur la face avant 1a du dispositif 1 comme illustré sur la [Fig. 1].

Selon une réalisation, l'indicateur comprend un ou plusieurs voyants lumineux 15 permettant d'afficher l'état de sécurité, de diagnostic et/ou de fonctionnement du dispositif 1. L'affichage du ou des voyants 15 peut notamment être comparé par l'opérateur avec la position du système de sécurisation afin de s'assurer de l'intégrité du dispositif 1.

On décrit ci-après un procédé de fonctionnement, et plus particulièrement d'installation, du système de sécurisation du dispositif 1, en lien avec la [Fig. 5].

Initialement, l'élément de commande 20 se trouve dans l'une des première, deuxième ou troisième positions A, B, C, correspondant respectivement au dispositif 1 dans l'état de sécurité élevé, l'état de sécurité faible ou l'état réinitialisé.

Si l'élément de commande 20 est initialement dans la première position, une étape du procédé consiste à vérifier si une sécurité a déjà été configurée sur le dispositif 1.

En cas de configuration déjà réalisée, le dispositif 1 peut être utilisé.

En cas de sécurité non encore configurée sur le dispositif 1, le procédé comprend une ou plusieurs étapes de configuration supplémentaires. Lors de ces étapes de configuration, des données de sécurité CS_conf peuvent être téléchargées par le dispositif 1, notamment au moyen de l'interface de communication 14. Le téléchargement se fait par exemple via une communication Ethernet ou USB depuis une application de configuration spécifique stockée dans un serveur distant ou dans un serveur web interne.

En variante, les données de sécurité CS_conf peuvent déjà être stockées dans la mémoire 13 du dispositif 1.

La sécurité est configurée au moyen d'un programme informatique avantageusement déjà présent dans le dispositif 1. Une fois la configuration effectuée, la sécurité est mise en œuvre et le dispositif 1 peut être utilisé.

Si l'élément de commande 20 est initialement dans la deuxième position, le dispositif 1 peut être utilisé sans nécessiter de configuration de sécurité particulière du dispositif 1.

Si l'élément de commande 20 est initialement la troisième position, l'élément de commande 20 doit être actionné dans l'une des autres positions avant toute utilisation afin que le dispositif 1 soit dans l'état de sécurité élevé ou faible. Les étapes du procédé décrites ci-dessus peuvent alors être mises en œuvre par la suite.

Lors de son utilisation, le dispositif 1 est fixé au support 2. La face arrière 1b du dispositif 1 n'est alors plus directement accessible à l'opérateur.

En outre, l'actionnement de l'élément de commande 20 est avantageusement désactivé lorsque le dispositif 1 est utilisé, notamment relié à la source d'alimentation.

Cela permet d'éviter que l'élément de commande 20 puisse être facilement actionné pour modifier l'état de sécurité du dispositif 1 après sa mise en marche.

Ainsi, si l'on souhaite passer de l'état de sécurité élevé à l'état de sécurité faible, ou inversement, il est nécessaire au préalable de débrancher le dispositif 1 de la source d'alimentation et/ou de séparer le dispositif 1 du support 2 afin que la face arrière 1b du dispositif 1 soit de nouveau accessible.

En cas d'actionnement non permis de l'élément de commande 20, le système de sécurisation peut comprendre une alarme (non illustrée), par exemple visuelle ou sonore, permettant d'avertir l'opérateur.

Selon une réalisation, pour passer d'un état de sécurité élevé à un état de sécurité faible, ou inversement, il est préalablement nécessaire d'actionner l'élément de commande 20 dans la troisième position.

Ainsi, la configuration de sécurité est nécessairement supprimée avant que le dispositif 1 ne puisse passer dans l'autre état de sécurité. Cela permet de s'assurer qu'aucune information relative à la configuration du dispositif 1 ne puisse être conservée dans l'état de sécurité faible, potentiellement plus vulnérable à des cyberattaques.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Système de sécurisation monté sur un dispositif (1) faisant partie d'un automate programmable industriel et comprenant une face avant (1a) et une face arrière (1b), le système de sécurisation étant monté sur la face arrière (1b), la face arrière (1b) étant configurée pour être disposé en contact avec un support (2) lors de l'utilisation du dispositif, le système de sécurisation comprenant un élément de commande (20) actionnable par un opérateur au moins :
- dans première position, dans laquelle le dispositif (1) est configuré pour être dans un état de sécurité élevé, et
- dans deuxième position, dans laquelle le dispositif (1) est configuré pour être dans un état de sécurité faible,
dans lequel la face arrière (1b) du dispositif (1) n'est pas directement accessible à l'opérateur lorsque la face arrière (1b) est en contact avec le support (2).

2. Système de sécurisation selon la revendication 1, dans lequel l'état de sécurité élevée comprend une configuration de fonctions de protection logicielles du dispositif (1).

3. Système de sécurisation selon la revendication 1 ou 2, dans lequel l'élément de commande (20) est actionnable par un opérateur manuellement.

4. Système de sécurisation selon la revendication 3, dans lequel l'élément de commande (20) comprend une fente permettant de faire pivoter un sélecteur (21) entre au moins la première position et la deuxième position.

5. Système de sécurisation selon la revendication 1 ou 2, dans lequel l'élément de commande (20) est actionnable par un opérateur au moyen d'une communication sans fil avec le dispositif (1) effectuée à courte portée.

6. Système de sécurisation selon l'une quelconque des revendications précédentes, dans lequel l'élément de commande (20) est également actionnable dans une troisième position, dans laquelle le dispositif (1) est dans un état réinitialisé.

7. Dispositif (1) comprenant le système de sécurisation selon l'une quelconque des revendications précédentes.

8. Procédé de fonctionnement du système de sécurisation selon l'une quelconque des revendications 1 à 6, comprenant les étapes suivantes :
- si l'élément de commande (20) est dans la première position :
- vérifier si une sécurité a déjà été configurée sur le dispositif (1), et
- si non, télécharger des données de configuration spécifiques au dispositif (1) et configurer l'état de sécurité élevé du dispositif (1) avant son utilisation.

9. Procédé selon la revendication 8 de fonctionnement du système de sécurisation selon la revendication 6, comprenant les étapes suivantes :
- si l'élément de commande (20) est dans la troisième position :
- actionner l'élément de commande (20) dans la première position ou la deuxième position.

10. Procédé selon la revendication 9, dans lequel l'actionnement de l'élément de commande (20) entre la première position et la deuxième position nécessite un passage intermédiaire dans la troisième position.

11. Programme informatique comportant des instructions pour la mise en œuvre du procédé selon l'une des revendications 8 à 10 lorsque ce programme est exécuté par un ordinateur.

12. Support d'enregistrement non transitoire lisible par un ordinateur sur lequel est enregistré un programme pour la mise en œuvre du procédé selon l'une des revendications 8 à 10 lorsque ce programme est exécuté par un ordinateur.

## Patentansprüche

1. Sicherungssystem, welches an einer Vorrichtung (1) angebracht ist, die Teil eines programmierbaren Industrieautomaten ist und eine Vorderseite (1a) und eine Rückseite (1b) umfasst, wobei das Sicherungssystem auf der Rückseite (1b) angebracht ist, wobei die Rückseite (1b) dafür ausgelegt ist, bei der Verwendung der Vorrichtung in Kontakt mit einem Träger (2) angeordnet zu werden, wobei das Sicherungssystem ein Steuerelement (20) umfasst, das durch eine Bedienperson wenigstens betätigbar ist:
- in einer ersten Position, in der die Vorrichtung (1) dafür ausgelegt ist, sich in einem Zustand hoher Sicherheit zu befinden, und
- in einer zweiten Position, in der die Vorrichtung (1) dafür ausgelegt ist, sich in einem Zustand geringer Sicherheit zu befinden,
wobei die Rückseite (1b) der Vorrichtung (1) für die Bedienperson nicht direkt zugänglich ist, wenn sich die Rückseite (1b) in Kontakt mit dem Träger (2) befindet.

2. Sicherungssystem nach Anspruch 1, wobei der Zustand hoher Sicherheit eine Konfiguration von Softwareschutzfunktionen der Vorrichtung (1) umfasst.

3. Sicherungssystem nach Anspruch 1 oder 2, wobei das Steuerelement (20) durch eine Bedienperson manuell betätigbar ist.

4. Sicherungssystem nach Anspruch 3, wobei das Steuerelement (20) einen Schlitz umfasst, der es ermöglicht, einen Wahlschalter (21) zwischen wenigstens der ersten Position und der zweiten Position zu drehen.

5. Sicherungssystem nach Anspruch 1 oder 2, wobei das Steuerelement (20) durch eine Bedienperson mittels einer drahtlosen Kommunikation mit kurzer Reichweite mit der Vorrichtung (1) betätigbar ist.

6. Sicherungssystem nach einem der vorhergehenden Ansprüche, wobei das Steuerelement (20) auch in einer dritten Position betätigbar ist, in der sich die Vorrichtung (1) in einem zurückgesetzten Zustand befindet.

7. Vorrichtung (1), welche ein Sicherungssystem nach einem der vorhergehenden Ansprüche umfasst.

8. Verfahren zum Betrieb eines Sicherungssystems nach einem der Ansprüche 1 bis 6, welches die folgenden Schritte umfasst:
- falls sich das Steuerelement (20) in der ersten Position befindet:
- überprüfen, ob an der Vorrichtung (1) bereits eine Sicherheit konfiguriert worden ist, und
- falls nicht, spezifische Konfigurationsdaten auf die Vorrichtung (1) herunterladen und den Zustand hoher Sicherheit der Vorrichtung (1) vor ihrer Verwendung konfigurieren.

9. Verfahren nach Anspruch 8 zum Betrieb des Sicherungssystems nach Anspruch 6, welches die folgenden Schritte umfasst:
- falls sich das Steuerelement (20) in der dritten Position befindet:
- das Steuerelement (20) in der ersten Position oder der zweiten Position betätigen.

10. Verfahren nach Anspruch 9, wobei die Betätigung des Steuerelements (20) zwischen der ersten Position und der zweiten Position einen dazwischenliegenden Übergang in die dritte Position erfordert.

11. Computerprogramm, welches Anweisungen für die Durchführung des Verfahrens nach einem der Ansprüche 8 bis 10, wenn dieses Programm von einem Computer ausgeführt wird, umfasst.

12. Computerlesbares nichtflüchtiges Aufzeichnungsmedium, auf dem ein Programm für die Durchführung des Verfahrens nach einem der Ansprüche 8 bis 10, wenn dieses Programm von einem Computer ausgeführt wird, aufgezeichnet ist.

## Claims

1. Security system fitted in a device (1) forming part of a programmable logic controller and comprising a front face (1a) and a back face (1b), the security system being fitted in the back face (1b), the back face (1b) being configured to be placed in contact with a holder (2) when the device is being used, the security system comprising a command element (20) that is actuatable by an operator at least:
- to a first position, in which the device (1) is configured to be in a high-security state, and
- to a second position, in which the device (1) is configured to be in a low-security state,
wherein the back face (1b) of the device (1) is not directly accessible to the operator when the back face (1b) is in contact with the holder (2).

2. Security system according to Claim 1, wherein the high-security state comprises a configuration of software protection functions of the device (1).

3. Security system according to Claim 1 or 2, wherein the command element (20) is actuatable by an operator manually.

4. Security system according to Claim 3, wherein the command element (20) comprises a slot allowing a selector (21) to be pivoted between at least the first position and the second position.

5. Security system according to Claim 1 or 2, wherein the command element (20) is actuatable by an operator by means of a short-range wireless communication with the device (1).

6. Security system according to any one of the preceding claims, wherein the command element (20) is also actuatable to a third position, in which the device (1) is in a reset state.

7. Device (1) comprising the security system according to any one of the preceding claims.

8. Method for operating the security system according to any one of Claims 1 to 6, comprising the following steps:
- if the command element (20) is in the first position:
- verifying whether the security of the device (1) has already been configured, and
- if not, downloading configuration data specific to the device (1) and configuring the high-security state of the device (1) before use thereof.

9. Method according to Claim 8 for operating the security system according to Claim 6, comprising the following steps:
- if the command element (20) is in the third position:
- actuating the command element (20) to the first position or the second position.

10. Method according to Claim 9, wherein the actuation of the command element (20) between the first position and the second position requires intermediate passage to the third position.

11. Computer program containing instructions for implementing the method according to one of Claims 8 to 10 when this program is executed by a computer.

12. Computer-readable non-volatile storage medium on which is stored a program for implementing the method according to one of Claims 8 to 10 when this program is executed by a computer.
